# EUROPÄISCHE PATENTSCHRIFT

(11) **EP 3 308 195 B1**
(45) Veröffentlichungstag und Bekanntmachung des Hinweises auf die Patenterteilung: **16.10.2019**
(21) Anmeldenummer: 16735981.9
(22) Anmeldetag: 14.06.2016
(51) Int. Cl.: G01S 13/22, G01S 13/20, G01S 17/10, G01S 17/42

(54) **VERFAHREN ZUR ENTFERNUNGSMESSUNG**
METHOD FOR MEASURING A DISTANCE
PROCÉDÉ DE MESURE DE L'ÉLOIGNEMENT

(30) Priorität: 15.06.2015 AT 504912015
(43) Veröffentlichungstag der Anmeldung: 18.04.2018
(73) Patentinhaber: Riegl Laser Measurement Systems GmbH, 3580 Horn (AT)
(72) Erfinder: RIEGER, Peter, 3824 Grossau (AT); ULLRICH, Andreas, 3003 Gablitz (AT)
(74) Vertreter: Weiser & Voith Patentanwälte Partnerschaft
(86) Internationale Anmeldenummer: PCT/AT2016/050196
(87) Internationale Veröffentlichungsnummer: WO 2016/201469

(56) Entgegenhaltungen:
- WO-A1-2016/138585
- GB-A- 1 298 709
- US-A- 4 143 373
- US-A1- 2012 257 186

## Beschreibung

Die vorliegende Erfindung betrifft ein Verfahren zur Entfernungsmessung von Umgebungszielen durch Laufzeitmessung von daran reflektierten Impulsen. Die Impulse können beliebiger Art sein, z.B. Lichtimpulse, insbesondere Laserimpulse, Funkimpulse, insbesondere Radarimpulse, Schallimpulse od.dgl.

Ein Verfahren gemäß den Oberbegriffen der Ansprüche 1 und 4 ist in der älteren, nicht-vorveröffentlichten Anmeldung WO 2016/138585 A1 beschrieben.

Moderne Impulslaufzeit-Entfernungsmesser wie Laserentfernungsmesser bzw. -scanner arbeiten mit hoher Impulsleistung über große Entfernungen und/oder hoher Impulswiederholrate zur raschen Erstellung einer Vielzahl von Entfernungsmesspunkten der Umgebung, wobei sie eine hohe Zeit- und/oder Ortsauflösung erzielen. In beiden Fällen kann sich die Situation ergeben, dass der nächste Impuls schon ausgesandt wird, noch bevor die Reflexion des letzten Impulses empfangen wurde, sodass die eintreffenden Empfangsimpulse nicht mehr eindeutig ihrem jeweiligen Sendeimpuls zugeordnet werden können. Dies ist als "multiple time around"- (MTA) bzw. "multiple pulses in the air"-Problem bekannt. Die maximale Größe dₘₐₓ des eindeutig vermessbaren Entfernungsbereiches, der sog. MTA-Zone, ergibt sich dabei aus der Impulswiederholrate (pulse repetition rate) PRR und der Lichtgeschwindigkeit c zu dₘₐₓ = c/(2·PRR).

Bietet ein Laserscanner beispielsweise eine Impulswiederholrate von 400 kHz, so entspricht dies einer MTA-Zonengröße dₘₐₓ von etwa 375 m.

Zur richtigen gegenseitigen Zuordnung der Sende- und Empfangsimpulse für eindeutige Entfernungsmessungsergebnisse sind verschiedenste Verfahren bekannt. Eine erste Möglichkeit besteht darin, bei der Planung der Vermessungsaufgabe darauf zu achten, dass alle zu erwartenden Umgebungsziele in ein- und derselben MTA-Zone liegen, um die korrekte Zuordnung vornehmen zu können. Dieses Verfahren ist naturgemäß nur für spezielle Messaufgaben anwendbar und z.B. für hochmobile oder weiträumige Vermessungs- oder Scanaufgaben, z.B. das luftgestützte Scannen von Geländeverläufen oder das bodengestützte Vermessen von Gebirgszügen oder bewegten Luftfahrzeugen, ungeeignet.

Eine andere Gruppe von Verfahren beruht darauf, die einzelnen Sendeimpulse durch Variation bzw. Codierung ihrer Polarisation, Amplitude oder Wellenlänge voneinander unterscheidbar zu machen, um die Empfangsimpulse entsprechend zuordnen zu können. Diese Verfahren sind jedoch entweder nur für wenige "pulses in the air" geeignet oder erfordern aufwändig codierte Impulse, was jeweils die Impulswiederholrate und den vermessbaren Entfernungsbereich begrenzt und die Messzeit verlängert.

Ein alternatives Verfahren, welches Pulspositionsmodulation anwendet, ist aus dem Patent EP 2 694 996 B1 derselben Anmelderin bekannt. Dabei wird eine Folge von in ihren gegenseitigen Impulsabständen modulierten Impulsen ausgesendet und die richtige MTA-Zone durch Aufsuchen der am wenigsten verrauschten Empfangsimpulsfolge bestimmt.

All diesen Verfahren ist jedoch gemeinsam, dass das Empfangen eines reflektierten (früheren) Impulses im Zeitpunkt des Aussendens eines (späteren) Impulses konstruktionsbedingt nicht möglich ist, u.zw. weil die Empfangselektronik durch Nahreflexionen bzw. das Rückstreuen eines ausgesandten Impulses an Komponenten des Entfernungsmessers, z.B. Gehäuse- oder Montageteilen oder einem Austrittsfenster desselben, gesättigt bzw. überlastet und damit "blind" für den Empfang eines reflektierten Impulses ist. An jeder Grenze zwischen zwei MTA-Zonen verbleibt somit eine Empfangslücke, eine sog. "blind ränge", in der Entfernungsmessung. Reflexionen an Umgebungszielen in solcher Entfernung können gar nicht - bzw. bei Pulspositionsmodulation nur in Einzelfällen und somit nur mit sehr geringer Zeit- bzw. Ortsauflösung - empfangen werden.

Die Erfindung setzt sich zum Ziel, ein Verfahren zum Entfernungsmessen bzw. Scannen von Umgebungszielen zu schaffen, durch welches die Auswirkungen von blind ranges an MTA-Zonengrenzen reduziert oder überhaupt unterbunden werden.

Dieses Ziel wird mit einem Verfahren gemäß dem Anspruch 1 bzw. 4 erreicht.

Das Verfahren beruht auf der Erkenntnis, dass auch bei großflächigem Scannen, z.B. dem luftgestützten Scannen eines Geländeverlaufs, insbesondere bei den heute erzielbaren sehr hohen Impulswiederholraten und der daraus resultierenden sehr hohen Messpunktdichte und somit Ortsauflösung, und noch mehr beim Entfernungsmessen bewegter Umgebungsziele große Unterschiede in den Impulslaufzeiten aufeinanderfolgend empfangener Impulse sehr selten sind. Die Empfangszeitpunkte der an den Umgebungszielen reflektierten, aufeinanderfolgend empfangenen Impulse nähern sich deshalb den Sendezeitpunkten mit ein und derselben Impulswiederholrate aufeinanderfolgend gesendeter Impulse im Allgemeinen langsam und annähernd gleichmäßig an, d.h. ein Geländeverlauf nähert sich einer blind range in der Praxis meist allmählich. Gemäß dem vorliegenden Verfahren wird, wenn der Empfangszeitpunkt eines reflektierten Impulses dem Sendezeitpunkt eines Sendeimpulses zu nahe kommt, der Geländeverlauf sich also einer blind range nähert, der folgende Sendezeitpunkt durch Vorgabe einer anderen Impulswiederholrate und somit eines anderen Impulsabstandes verschoben, wodurch proportional die blind ranges in ihrer Entfernung zum Laserscanner bzw. Entfernungsmesser versetzt werden. Durch dieses selektive Verschieben bzw. Versetzen der blind ranges werden - bei geeignetem Festlegen des genannten ersten Schwellwerts - in den allermeisten Fällen das Eintreffen einer Reflexion zu einem Sendezeitpunkt und somit eine Empfangslücke sehr effektiv verhindert.

Das vorliegende Verfahren ist zudem mit allen im Stand der Technik bekannten Verfahren zur richtigen gegenseitigen Zuordnung der Sende- und Empfangsimpulse, d.h. zur Erkennung der MTA-Zone, kombinierbar; bei Anwendung von Verfahren mit Pulspositionsmodulation entsprechen die genannten Impulswiederholraten aus der genannten Menge jeweils einer mittleren Impulswiederholrate der Pulspositionsmodulation.

Gemäß einer Ausführungsform der Erfindung unterscheiden sich der Kehrwert der größten Impulswiederholrate und der Kehrwert der kleinsten Impulswiederholrate aus der Menge voneinander um mindestens das Doppelte des ersten Schwellwerts. Auf diese Weise wird in dem praxisbezogenen Fall, dass sich die Impulslaufzeiten aufeinanderfolgender Impulse nicht sprunghaft sondern nur allmählich ändern, ein Zusammenfallen von Sende- und Empfangszeitpunkt bzw. von Umgebungszielentfernung und blind range besonders zuverlässig vermieden, da der Unterschied in den Impulswiederholraten so groß ist, dass folgende Sendezeitpunkte ausreichend weit verschoben sind.

Je nachdem, ob ein Empfangszeitpunkt dem letztvergangenen oder dem nächstfolgenden Sendezeitpunkt nahe liegt bzw. ob sich ein Umgebungsziel aus Sicht des Laserscanners vor oder hinter einer nahen blind range befindet, wirkt das Vorgeben einer anderen Impulswiederholrate somit entweder wie ein "Zurückweichen" der blind range gegenüber dem Umgebungsziel oder wie ein "Überspringen" des Umgebungsziels; der nächstfolgende Sendezeitpunkt wird demnach vom folgenden Empfangszeitpunkt entweder weiter entfernt liegen ("zurückweichen") oder deren zeitliche Abfolge wird vertauscht sein ("überspringen").

Um ein gezieltes Überspringen bzw. Zurückweichen zu erreichen, wird in einer besonders bevorzugten Ausführungsform des Verfahrens, wenn der beim Unterschreiten des ersten Schwellwerts ermittelte Sendezeitpunkt vor dem genannten Empfangszeitpunkt liegt, als zweite Impulswiederholrate die nächstgrößere oder, wenn keine solche vorhanden, die kleinste Impulswiederholrate aus der Menge ausgewählt, und, wenn der beim Unterschreiten des ersten Schwellwerts ermittelte Sendezeitpunkt nach dem genannten Empfangszeitpunkt liegt, als zweite Impulswiederholrate die nächstkleinere oder, wenn keine solche vorhanden, die größte Impulswiederholrate aus der Menge ausgewählt. Durch derartiges Verschieben der Sendezeitpunkte und Versetzen der blind ranges kann deren Auswirkung gezielt unterbunden werden.

Besonders günstig ist es ferner, wenn in dem Fall, dass die ermittelte Zeitspanne einen festgelegten zweiten Schwellwert, welcher größer ist als der erste Schwellwert, überschreitet, als zweite Impulswiederholrate die nächstgrößere oder größte Impulswiederholrate aus der Menge ausgewählt wird. Auf diese Weise kehrt das Verfahren zur Entfernungsmessung nach einem Zurückweichen bzw. Überspringen der blind ranges rascher zu der größtmöglichen Impulswiederholrate zurück, wodurch rascher eine höhere oder die höchstmögliche Zeit- bzw. Ortsauflösung erzielt wird.

Die Erfindung wird nachstehend anhand von in den beigeschlossenen Zeichnungen dargestellten Ausführungsbeispielen näher erläutert. In den Zeichnungen zeigen:
Fig. 1 ein schematisches Beispiel für die Impulslaufzeit-Entfernungsmessung eines Geländeverlaufs mittels eines luftgestützten Laserscanners gemäß dem Stand der Technik;
Fig. 2 beispielhafte Zeitdiagramme von Sende- und Empfangsimpulsen für verschiedene Schritte und Varianten des Verfahrens der Erfindung;
Fig. 3 beispielhafte Varianten einer Anwendung des erfindungsgemäßen Verfahrens von Fig. 2 auf die Situation von Fig. 1 mit einem zugehörigen Diagramm von Impulswiederholraten über dem Scanwinkel bzw. der Zeit; und
die Fig. 4a bis 4h verschiedene Varianten des Verfahrens der Fig. 2 und 3 in Diagrammen von Impulswiederholraten über dem Scanwinkel bzw. der Zeit.

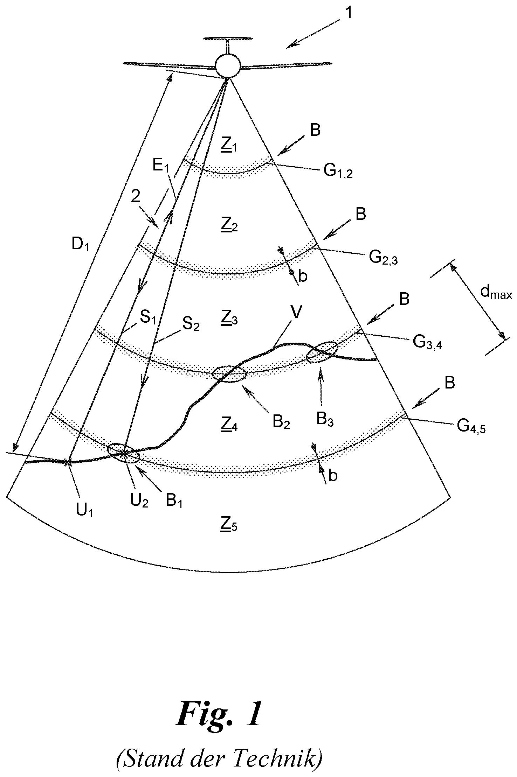

Gemäß dem Beispiel von Fig. 1 wird von einem flugzeuggestützten Laserscanner 1 ein gepulster Lasermessstrahl 2 abtastend über einen Geländeverlauf V, z.B. ein Gebirge, mit einzelnen Umgebungszielen (Abtastpunkten) U₁, U₂,..., allgemein U, geführt, z.B. zeilenweise fächerförmig. Aus Laufzeitmessungen an den einzelnen ausgesandten Impulsen S₁, S₂,..., allgemein S, die nach der Umgebungsreflexion als Empfangsimpulse E₁, E₂,..., allgemein E, zurückerhalten werden, können die Zielentfernungen D₁, D₂,..., allgemein D, zu den einzelnen Umgebungszielen U bestimmt werden.

Der Laserscanner 1 arbeitet mit einer sehr hohen Impulswiederholrate (pulse repetition rate) PRR und bestimmt dabei die Zielentfernungen D einer Vielzahl von Umgebungszielen U in rascher Folge, wodurch eine hohe Zeit- bzw. Ortsauflösung bei kurzer Gesamtmessdauer ermöglicht wird. Ist ein Umgebungsziel U, z.B. U₁, vom Laserscanner 1 weiter entfernt als es dem Quotient von Lichtgeschwindigkeit c und doppelter Impulswiederholrate PRR entspricht, so wird der nächste Sendeimpuls S schon ausgesandt, bevor noch die Reflexion E des letzten Sendeimpulses S empfangen wurde. Dabei können die eintreffenden Empfangsimpulse E nicht mehr eindeutig ihrem jeweiligen Sendeimpuls S zugeordnet werden. Dies ist als "multiple time arround"- (MTA-) bzw. "multiple pulses in the air"-Problem bekannt. Im Beispiel von Fig. 1 bilden sich auf diese Weise fünf eindeutige vermessbare Entfernungsbereiche, auch "MTA-Zonen" genannt, Z₁, Z₂,..., Z₅, allgemein Z, aus, deren Breite jeweils dₘₐₓ = c/(2·PRR) ist.

Zonengrenzen G_{1,2}, G_{2,3},..., allgemein G, zwischen jeweils zwei MTA-Zonen Z stellen somit jene Entfernung vom Laserscanner 1 dar, ab deren Überschreitung ein weiterer "pulse in the air" ist. Liegt ein Umgebungsziel U₂ an einer Zonengrenze G, hier: der Zonengrenze G₄,₅, so trifft der reflektierte Impuls E genau im Zeitpunkt des Aussendens eines folgenden Sendeimpulses S beim Laserscanner 1 ein und kann aus den eingangs genannten Gründen von Geräte-Nahreflexionen bzw. Rückstreuungen der Sendeimpulse S in die Empfangselektronik des Entfernungsmessers bzw. Scanners 1 nicht empfangen werden. Umgebungsziele U an den Zonengrenzen G sind somit für den Laserscanner 1 unsichtbar, sodass sich um jede Zonengrenze G ein blinder Bereich bzw. eine "blind range" B ausbildet, dessen bzw. deren Breite b unter anderem von der Breite bzw. Zeitdauer des Sendeimpulses S und der Entfernung störender Nahziele im Laserscanner 1, z.B. Gehäuseteile oder Durchtrittsfenster, abhängt.

Für den Geländeverlauf V im Beispiel von Fig. 1 ergeben sich drei konkrete Bereiche B₁, B₂ und B₃ an den Zonengrenzen G₄,₅ bzw. G_{3,4}, in welchen keine Umgebungsziele U erfasst werden können.

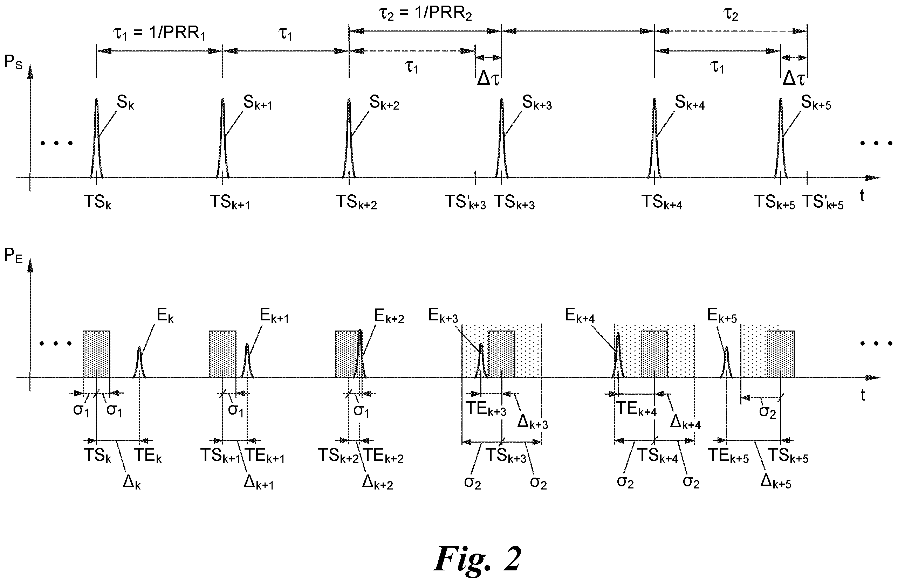

Anhand verschiedener in den Fig. 2 bis 4 dargestellter Beispiele wird im Folgenden ein Verfahren zur Impulslaufzeit-Entfernungsmessung beschrieben, welches die Auswirkung der blind ranges B reduziert bzw. vermeidet.

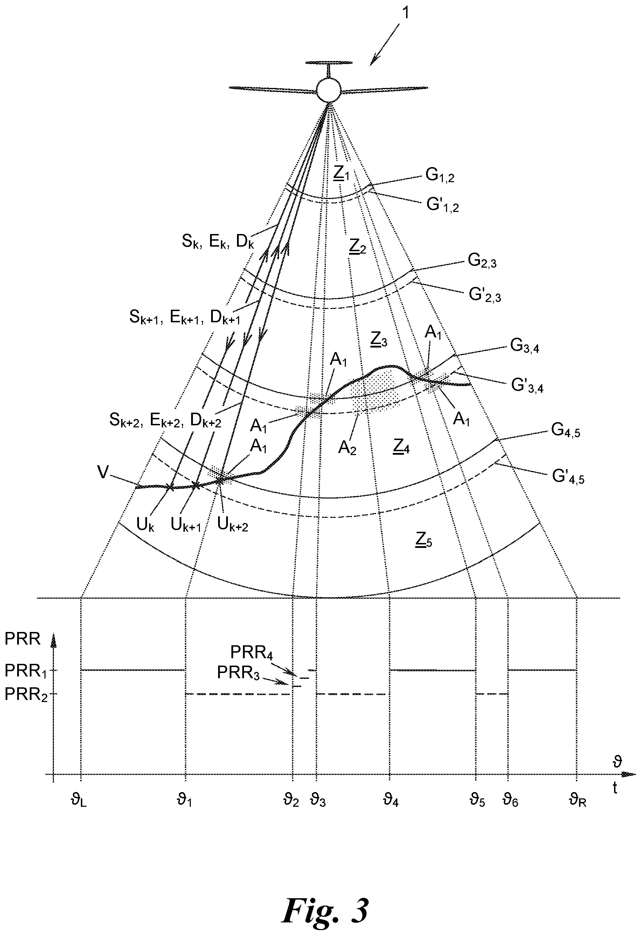

Gemäß den Fig. 2 und 3 werden drei beispielhafte Sendeimpulse Sₖ, Sₖ₊₁, Sₖ₊₂ (im Diagramm von Fig. 2 als Sendeimpulsleistung P_{S} über der Zeit t dargestellt) mit einem vorgegebenen ersten gegenseitigen Impulsabstand τ₁, welcher der Kehrwert 1/PRR₁ einer ersten Impulswiederholrate PRR₁ ist, aufeinanderfolgend jeweils zu einem Sendezeitpunkt TSₖ, TSₖ₊₁, TSₖ₊₂ ausgesendet. Die erste Impulswiederholrate PRR₁ wird dabei aus einer Menge M = {PRRᵢ}(i = 1, 2, ..., I; I ≥ 2) von zumindest zwei verschiedenen Impulswiederholraten PRRᵢ ausgewählt, wie später noch ausführlicher erläutert. Begleitend werden zu Empfangszeitpunkten TEₖ, TEₖ₊₁,... Empfangsimpulse Eₖ, Eₖ₊₁,... (im Diagramm von Fig. 2 als Empfangsimpulsleistung P_{E} über der Zeit t dargestellt) vom Laserscanner 1 empfangen.

Zur einfacheren Erläuterung des vorliegenden Verfahrens wird in dem Beispiel der Fig. 2 und 3 für den einem jeweiligen Sendeimpuls S zugeordneten Empfangsimpuls E jeweils derselbe Index k verwendet und die in Fig. 2 gewählte zeitliche Übereinanderdarstellung der Sende- und Empfangsimpulszüge P_{S}(t) und P_{E}(t) lässt auf Umgebungsziele U in der ersten MTA-Zone Z₁ schließen; für Ziele U in anderen MTA-Zonen, wie hier die Ziele Uₖ, Uₖ₊₁, Uₖ₊₂ in der vierten und fünften MTA-Zone Z₄, Z₅, ist ein entsprechender zeitlicher Versatz zwischen den beiden Impulszügen P_{S}(t) und P_{E}(t) in Fig. 2 zu berücksichtigen. Die entsprechende MTA-Zonen-richtige Zuordnung der Sende- und Empfangsimpulse S, E der beiden Impulszüge P_{S}(t) und P_{E}(t) kann unabhängig vom vorliegenden Verfahren auf jede in der Technik bekannte Art durchgeführt werden und ist hier nicht weiter beschrieben.

Es versteht sich, dass der gegenseitige Abstand der Empfangsimpulse E nicht ausschließlich vom Impulsabstand (hier: τ₁) der zugehörigen Sendeimpulse S abhängt, sondern ebenso von der Entfernung der diese jeweils reflektierenden Umgebungsziele U. Deshalb nähern sich im Beispiel von Fig. 2 die Empfangszeitpunkte TEₖ, TEₖ₊₁, und TEₖ₊₂ den jeweils nächstliegenden Sendezeitpunkten TSₖ, TSₖ₊₁ und TSₖ₊₂ fortschreitend an, wenn sich wie im Beispiel von Fig. 3 bei einem zeilenweise fächerförmig abtastenden Scannen in einem Winkelbereich zwischen den Abtast-Grenzwinkeln ϑ_{L} und ϑ_{R} von links nach rechts die Zielentfernungen Dₖ, Dₖ₊₁, Dₖ₊₂ dreier abgetasteter Umgebungsziele Uₖ, Uₖ₊₁, Uₖ₊₂ vom Laserscanner 1 laufend verringern.

Gemäß Fig. 2 werden beim Empfangen eines reflektierten Empfangsimpulses Eₖ der seinem Empfangszeitpunkt TEₖ nächstliegende Sendezeitpunkt TS (hier: der Sendezeitpunkt TSₖ) und eine Zeitspanne Δₖ zwischen diesen beiden ermittelt. In der Folge wird geprüft, ob die ermittelte Zeitspanne Δₖ einen festgelegten ersten Schwellwert σ₁ unterschreitet, d.h. ob der Empfangszeitpunkt TEₖ innerhalb eines Fensters liegt, welches sich mit der "Breite" des ersten Schwellwerts σ₁ jeweils nach links und rechts vom nächstermittelten Sendezeitpunkt TSₖ erstreckt. Im Beispiel der Fig. 2 trifft dies auf die Empfangsimpulse Eₖ, Eₖ₊₁ nicht zu; hingegen ist die für den Empfangszeitpunkt TEₖ₊₂ des dritten Empfangsimpulses Eₖ₊₂ ermittelte Zeitspanne Aₖ₊₂ zum zeitlich nächstliegenden Sendezeitpunkt TSₖ₊₂ kleiner als der genannte erste Schwellwert σ₁. Wenn gewünscht, kann eine solche Zeitspanne Δₖ, Δₖ₊₁,... auch nur für jeden zweiten Empfangsimpuls E oder seltener, z.B. in Abhängigkeit von einer zuvor ermittelten Zeitspanne Δₖ₋₁, Δₖ₋₂,... ermittelt werden.

Im Fall des Unterschreitens des ersten Schwellwerts σ₁ wird aus der genannten Menge M = {PRRᵢ} eine zweite Impulswiederholrate PRR₂ ausgewählt und für das folgende Aussenden von Sendeimpulsen S, hier: Sₖ₊₃, Sₖ₊₄, vorgegeben. Die Sendeimpulse Sₖ₊₂, Sₖ₊₃ und Sₖ₊₄ haben folglich einen gegenseitigen Impulsabstand τ₂, welcher dem Kehrwert 1/PRR₂ der zweiten Impulswiederholrate PRR₂ entspricht und sich um einen Betrag Δτ von dem ersten Impulsabstand τ₁ unterscheidet, siehe den hypothetischen Sendezeitpunkt TS'ₖ₊₃ in Fig. 2 mit Impulsabstand τ₁ vom Sendezeitpunkt TSₖ₊₂. Die Zonengrenzen G verschieben sich dadurch von den mit durchgezogenen Linien gezeigten Positionen zu den mit strichlierten Linien gezeigten Positionen, z.B. die Grenze G_{4,5} zur Grenze G'_{4,5}.

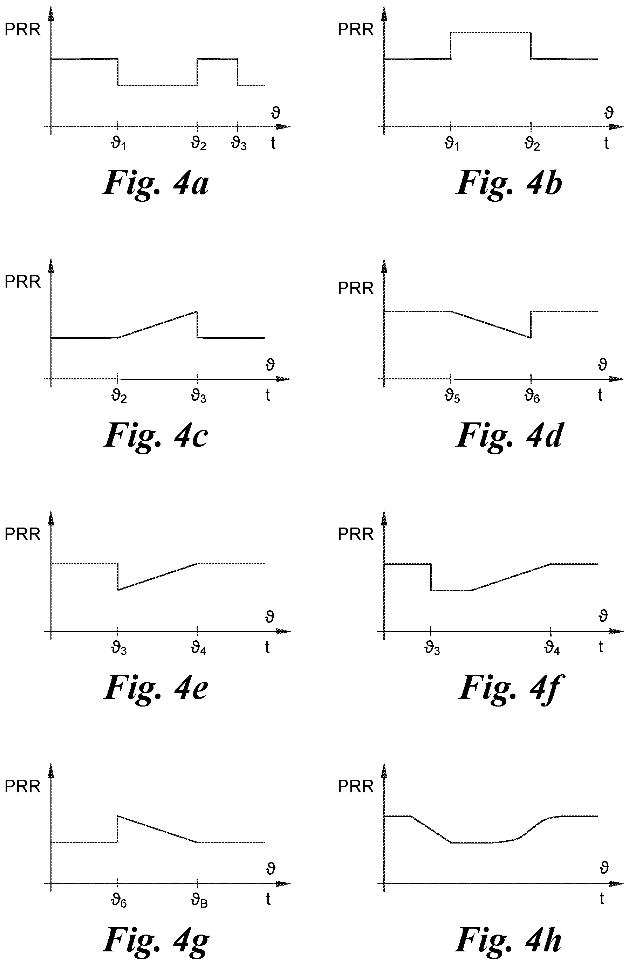

Fig. 3 zeigt ein solches Auswählen der zweiten Impulswiederholrate PRR₂ aus der Menge M bei einem Abtastwinkel ϑ₁ in einem Diagramm der Impulswiederholraten PRR über dem Abtastwinkel ϑ bzw. der Zeit t als Sprung von der ersten Impulswiederholrate PRR₁ auf die (kleinere) zweite Impulswiederholrate PRR₂; dies kann ferner dem schematischen Diagramm von Fig. 4a entnommen werden. Der zu diesem Beispiel alternativ mögliche Fall, dass die erste Impulswiederholrate PRR₁ kleiner ist als die zweite PRR₂, ist in Fig. 4b dargestellt.

Das zeitliche Annähern des Empfangszeitpunkts TEₖ₊₂ an den Sendezeitpunkt TSₖ₊₂ (Fig. 2) ist ferner in Fig. 3 erkennbar, indem der Geländeverlauf V beim Abtastwinkel ϑ₁ gleichsam in einen dem ersten Schwellwert σ₁ entsprechenden örtlichen Abschnitt A₁ um die Zonengrenze G₄,₅ eintritt, welcher durch graue Schattierung versinnbildlicht ist. Durch entsprechende Festlegung des ersten Schwellwerts σ₁ hat der Abschnitt A₁ z.B. etwa dieselbe Breite b (Fig. 1) wie die blind ranges B; er kann alternativ breiter oder (weniger bevorzugt) sogar schmäler sein.

Zurückkommend auf das Beispiel von Fig. 2 liegt der nächste Sendezeitpunkt TSₖ₊₃ nach der genannten Impulswiederholraten-Änderung von PRR₁ auf PRR₂ nun ausreichend weit vom nächsten auftretenden Empfangszeitpunkt TEₖ₊₃ entfernt, in diesem Beispiel danach; der Empfangsimpuls Eₖ₊₃ wurde gleichsam "übersprungen". Fig. 3 zeigt dieses Überspringen als eine Versetzung der Zonengrenze von G_{4,5} (infolge der ersten Impulswiederholrate PRR₁) nach G'_{4,5} (infolge der zweiten Impulswiederholrate PRR₂), wodurch gleichsam die blind range B beim Abtastwinkel ϑ₁ den Geländeverlauf V "überspringt". Dazu könnte ferner der erste Schwellwert σ₁ optional in Abhängigkeit von der jeweils betrachteten MTA-Zone Z festgelegt werden.

Alternativ zu einem solchen Überspringen kann durch geeignete Auswahl einer anderen Impulswiederholrate PRRᵢ aus der Menge M ein "Zurückweichen" der Sendezeitpunkte S gegenüber den Empfangszeitpunkten E bzw. einer Zonengrenze G gegenüber dem Geländeverlauf V realisiert werden, wie für den Abtastwinkelbereich ϑ₂ bis ϑ₃ im Beispiel der Fig. 4a für eine Menge M von zwei und im Beispiel der Fig. 3 für eine Menge M von vier verschiedenen Impulswiederholraten PRRᵢ versinnbildlicht ist. Im letzteren Beispiel wird - ausgehend von der kleinsten Impulswiederholrate (hier: PRR₂) - bei Annäherung des Geländeverlaufs V an den Laserscanner 1 und die Zonengrenze G'_{3,4} zunächst die nächsthöhere Impulswiederholrate PRR₃ und bei weiterer Annäherung an die neue resultierende Zonengrenze die nochmals höhere Impulswiederholrate PRR₄ vorgegeben usw. usf., bis zur höchsten Impulswiederholrate (hier: PRR₁). Bei weiterer Annäherung ist ein Zurückweichen mangels höherer Impulswiederholraten PRRᵢ in der Menge M nicht möglich; stattdessen wird in diesem Fall beim Abtastwinkel ϑ₃ die kleinste Impulswiederholrate (hier: PRR₂) der Menge M ausgewählt und dadurch der Geländeverlauf V übersprungen, siehe die Fig. 3 und 4a.

Fig. 4c zeigt dieselbe Situation für eine Menge M mit einer Vielzahl von Impulswiederholraten PRRᵢ als quasi-kontinuierlichen, rampenförmigen Verlauf. In Fig. 4d ist diese Situation für das dazu umgekehrte Beispiel dargestellt, wobei sich der Geländeverlauf V unter Entfernen vom Laserscanner 1 an eine Zonengrenze G annähert, sodass das Vorgeben von immer kleineren Impulswiederholraten PRRᵢ der Menge M zunächst zu einem Zurückweichen und bei Erreichen der kleinsten Impulswiederholrate PRRᵢ das Vorgeben der größten Impulswiederholrate PRRᵢ der Menge M ein Überspringen ergibt, wie dies vergleichbar für eine Menge M = {PRRᵢ, PRR₂} von zwei Impulswiederholraten PRRᵢ für die Abtastwinkel ϑ₅ bis ϑ₆ im Beispiel der Fig. 3 gezeigt ist.

Wie anhand dieser Beispiele erkennbar ist, unterscheiden sich der Kehrwert (im Beispiel von Fig. 2: der Impulsabstand τ₁) der größten Impulswiederholrate (hier: PRR₁) und der Kehrwert (hier: der Impulsabstand τ₂) der kleinsten Impulswiederholrate (hier: PRR₂) aus der Menge M voneinander um mindestens das Doppelte des ersten Schwellwerts σ₁; wenn auf das Empfangen einzelner reflektierter Impulse verzichtet werden kann, könnte die Differenz der genannten Kehrwerte auch geringer sein.

In der Praxis ist es günstig, wenn möglichst oft die höchste Impulswiederholrate PRRᵢ aus der Menge M (im vorliegenden Beispiel: PRR₁) vorgegeben wird, da dies die rascheste Impulsfolge und somit höchstmögliche Messauflösung nach sich zieht. Zu diesem Zweck wird optional einem sich von einer Zonengrenze G entfernenden Geländeverlauf V gleichsam "nachgeeilt", wie im Folgenden anhand des Abtastwinkels ϑ₄ und für den Empfangsimpuls Eₖ₊₅ in den Beispielen der Fig. 2 und 3 erläutert werden soll.

Dazu werden ein zweiter Schwellwert σ₂, welcher größer ist als der erste Schwellwert σ₁, und dadurch ein zweiter Ortsabschnitt A₂ (Fig. 3) festgelegt. Die Zeitspanne Aₖ₊₅ des Empfangszeitpunkts TEₖ₊₅ zum nächstgelegenen Sendezeitpunkt TSₖ₊₅ überschreitet diesen zweiten Schwellwert σ₂ - was für die Zeitspanne Δₖ₊₄ zum Empfangszeitpunkt TEₖ₊₄ noch nicht der Fall war - und der Geländeverlauf V verlässt beim Abtastwinkel ϑ₄ den Abschnitt A₂. Folglich wird die nächstgrößere oder gleich die größte Impulswiederholrate (hier: PRR₁) aus der Menge M ausgewählt. Die Zeitspanne Δₖ₊₅ kann, wie im dargestellten Beispiel, bereits ausgehend von dem gemäß der neu ausgewählten Impulswiederholrate PRR₁ geänderten Sendezeitpunkt TSₖ₊₅ - gemäß Fig. 3 liegt dazu der Abschnitt A₂ an der Zonengrenze G_{3,4} der neu ausgewählten Impulswiederholrate PRR₁ - oder alternativ ausgehend vom Sendezeitpunkt TS'ₖ₊₅, d.h. auf Grundlage der zuletzt vorgegebenen Impulswiederholrate PRR₂, ermittelt werden.

Durch das Zusammenspiel von erstem und zweitem Schwellwert σ₁, σ₂ wird gleichsam eine Hysterese erzeugt: Nähern sich die Empfangszeitpunkte TE den Sendezeitpunkten TS bzw. der Geländeverlauf V einer blind range B an, sodass der erste Schwellwert σ₁ unterschritten wird, so erfolgt ein Zurückweichen oder Überspringen, siehe die Abtastwinkel ϑ₁, ϑ₂ und ϑ₃ im Beispiel der Fig. 3; wird daraufhin weder der erste Schwellwert σ₁ unterschritten noch der zweite Schwellwert σ₂ überschritten, so wird keine neue Impulswiederholrate PRRᵢ aus der Menge M ausgewählt, was erst beim Überschreiten des zweiten Schwellwerts σ₂ erfolgt; wird in der Folge der zweite Schwellwert σ₂ durch erneutes Annähern wiederum unterschritten, so bleibt die Impulswiederholrate PRRᵢ hingegen bis zum Unterschreiten auch des ersten Schwellwerts σ₁ unverändert.

Es versteht sich, dass das genannte Nacheilen dabei - wie ähnlich das zuvor beschriebene Zurückweichen - einerseits bei einer Menge M von zwei Impulswiederholraten PRRᵢ sprungförmig (wie beim Abtastwinkel ϑ₄ in Fig. 3) oder andererseits bei einer größeren Menge M von Impulswiederholraten PRRᵢ mehrstufig bzw. rampenförmig (Fig. 4e) oder, z.B. bei größerer Differenz zwischen dem ersten und zweiten Schwellwert σ₁, σ₂ wie im Beispiel der Fig. 4f, rampenförmig mit Knick erfolgen kann, u.zw. einerseits bei sich dem Laserscanner 1 gemäß den Fig. 4e und 4f näherndem und andererseits bei sich vom Laserscanner 1 gemäß dem Beispiel von Fig. 4g entfernendem Geländeverlauf V. Ferner könnte das Zurückweichen oder Nacheilen auch annähernd S-förmig erfolgen (Fig. 4h). Fig. 4h veranschaulicht zudem den besonderen Fall, in welchem dem sich einer Zonengrenze G nähernden Geländeverlauf V zunächst ausgewichen wird, der Geländeverlauf V sich jedoch in der Folge wieder entfernt, sodass ohne Überspringen ein Nacheilen möglich wird.

Die Erfindung ist nicht auf die dargestellten Ausführungsformen beschränkt, sondern umfasst alle Varianten, Kombinationen und Modifikationen, die in den Rahmen der angeschlossenen Ansprüche fallen. So könnte die Entfernungsmessung beispielsweise auf Grundlage von allgemeinen Lichtimpulsen, Funkimpulsen, insbesondere Radarimpulsen, Schallimpulsen od.dgl. und/oder von - stationären oder beweglichen - boden-, luft- oder seegestützten Scannern oder Entfernungsmessern aus, welche beispielsweise auf bewegliche Umgebungsziele U gerichtet werden, durchgeführt werden.

## Patentansprüche

1. Verfahren zur Entfernungsmessung von Umgebungszielen (U) durch Laufzeitmessung von daran reflektierten Impulsen, insbesondere Laserimpulsen, welche gemäß einer vorgebbaren Impulswiederholrate (PRR) aufeinanderfolgend jeweils zu einem Sendezeitpunkt (TS) ausgesendet und nach ihrer Reflexion jeweils zu einem Empfangszeitpunkt (TE) empfangen werden, umfassend:
Auswählen einer ersten Impulswiederholrate (PRR₁) aus einer Menge (M) von zumindest zwei verschiedenen Impulswiederholraten (PRRᵢ) und Vorgeben der ausgewählten Impulswiederholrate (PRR₁) für das Aussenden,
Ermitteln eines Sendezeitpunkts (TS), welcher dem Empfangszeitpunkt (TE) eines reflektierten Impulses (E) zeitlich am nächsten liegt, und einer Zeitspanne (Δ) zwischen diesen,
und, wenn die ermittelte Zeitspanne (Δ) einen festgelegten ersten Schwellwert (σ₁) unterschreitet, Auswählen einer zweiten Impulswiederholrate (PRR₂) aus der Menge (M) und Vorgeben der zweiten Impulswiederholrate (PRR₂) für das Aussenden,
**dadurch gekennzeichnet, dass** der Kehrwert der größten Impulswiederholrate (PRR₁) und der Kehrwert der kleinsten Impulswiederholrate (PRR₂) aus der Menge (M) sich voneinander um mindestens das Doppelte des ersten Schwellwerts (σ₁) unterscheiden.

2. Verfahren nach Anspruch 1, **dadurch gekennzeichnet, dass**, wenn der beim Unterschreiten des ersten Schwellwerts (σ₁) ermittelte Sendezeitpunkt (TS) vor dem genannten Empfangszeitpunkt (TE) liegt, als zweite Impulswiederholrate (PRRᵢ) die nächstgrößere oder, wenn keine solche vorhanden, die kleinste Impulswiederholrate (PRRᵢ) aus der Menge (M) ausgewählt wird,
und, wenn der beim Unterschreiten des ersten Schwellwerts (σ₁) ermittelte Sendezeitpunkt (TS) nach dem genannten Empfangszeitpunkt (TE) liegt, als zweite Impulswiederholrate (PRRᵢ) die nächstkleinere oder, wenn keine solche vorhanden, die größte Impulswiederholrate (PRRᵢ) aus der Menge (M) ausgewählt wird.

3. Verfahren nach Anspruch 1 oder 2, **dadurch gekennzeichnet, dass**, wenn die ermittelte Zeitspanne (Δ) einen festgelegten zweiten Schwellwert (σ₂), welcher größer ist als der erste Schwellwert (σ₁), überschreitet, als zweite Impulswiederholrate (PRRᵢ) die nächstgrößere oder größte Impulswiederholrate (PRRᵢ) aus der Menge (M) ausgewählt wird.

4. Verfahren zur Entfernungsmessung von Umgebungszielen (U) durch Laufzeitmessung von daran reflektierten Impulsen, insbesondere Laserimpulsen, welche gemäß einer vorgebbaren Impulswiederholrate (PRR) aufeinanderfolgend jeweils zu einem Sendezeitpunkt (TS) ausgesendet und nach ihrer Reflexion jeweils zu einem Empfangszeitpunkt (TE) empfangen werden, umfassend:
Auswählen einer ersten Impulswiederholrate (PRR₁) aus einer Menge (M) von zumindest zwei verschiedenen Impulswiederholraten (PRRᵢ) und Vorgeben der ausgewählten Impulswiederholrate (PRR₁) für das Aussenden,
Ermitteln eines Sendezeitpunkts (TS), welcher dem Empfangszeitpunkt (TE) eines reflektierten Impulses (E) zeitlich am nächsten liegt, und einer Zeitspanne (Δ) zwischen diesen,
und, wenn die ermittelte Zeitspanne (Δ) einen festgelegten ersten Schwellwert (σ₁) unterschreitet, Auswählen einer zweiten Impulswiederholrate (PRR₂) aus der Menge (M) und Vorgeben der zweiten Impulswiederholrate (PRR₂) für das Aussenden,
**dadurch gekennzeichnet, dass**, wenn die ermittelte Zeitspanne (Δ) einen festgelegten zweiten Schwellwert (σ₂), welcher größer ist als der erste Schwellwert (σ₁), überschreitet, als zweite Impulswiederholrate (PRRᵢ) die nächstgrößere oder größte Impulswiederholrate (PRRᵢ) aus der Menge (M) ausgewählt wird.

5. Verfahren nach Anspruch 4, **dadurch gekennzeichnet, dass**, wenn der beim Unterschreiten des ersten Schwellwerts (σ₁) ermittelte Sendezeitpunkt (TS) vor dem genannten Empfangszeitpunkt (TE) liegt, als zweite Impulswiederholrate (PRRᵢ) die nächstgrößere oder, wenn keine solche vorhanden, die kleinste Impulswiederholrate (PRRᵢ) aus der Menge (M) ausgewählt wird,
und, wenn der beim Unterschreiten des ersten Schwellwerts (σ₁) ermittelte Sendezeitpunkt (TS) nach dem genannten Empfangszeitpunkt (TE) liegt, als zweite Impulswiederholrate (PRRᵢ) die nächstkleinere oder, wenn keine solche vorhanden, die größte Impulswiederholrate (PRRᵢ) aus der Menge (M) ausgewählt wird.

## Claims

1. Method for measuring the distance of environmental targets (U) by time-of-flight measuring of pulses reflected therefrom, in particular laser pulses, which are emitted according to a provideable pulse repetition rate (PRR) successively each at an emission time (TS) and received after their reflection each at a reception time (TE), comprising:
selecting a first pulse repetition rate (PRR₁) from a set (M) of at least two different pulse repetition rates (PRRᵢ) and providing the selected pulse repetition rate (PRR₁) for the emission,
determining an emission time (TS) to which the reception time (TE) of a reflected pulse (E) is temporally closest and a time interval (Δ) therebetween,
and, when the determined time interval (Δ) undershoots a predetermined first threshold (σ₁), selecting a second pulse repetition rate (PRR₂) from the set (M) and providing the second pulse repetition rate (PRR₂) for the emission,
**characterized in that** the reciprocal value of the highest pulse repetition rate (PRR₁) and the reciprocal value of the lowest pulse repetition rate (PRR₂) in the set (M) differ by at least twice the value of the first threshold (σ₁).

2. Method according to claim 1, **characterized in that**, if the emission time (TS) that is determined when the first threshold (σ₁) is undershot lies before said reception time (TE), the next higher or, if none such exists, the lowest pulse repetition rate (PRR₁) from the set (M) is selected as second pulse repetition rate (PRR₂),
and, if the emission time (TS) that is determined when the first threshold (σ₁) is undershot lies after said reception time (TE), the next lower or, if none such exists, the highest pulse repetition rate (PRRᵢ) from the set (M) is selected as second pulse repetition rate (PRR₂).

3. Method according to claim 1 or 2, **characterized in that**, if the determined time interval (Δ) exceeds a predetermined second threshold (σ₂) that is larger than the first threshold (σ₁), the next higher or the highest pulse repetition rate (PRRᵢ) from the set (M) is selected as second pulse repetition rate (PRR₂).

4. Method for measuring the distance of environmental targets (U) by time-of-flight measuring of pulses reflected therefrom, in particular laser pulses, which are emitted according to a provideable pulse repetition rate (PRR) successively each at an emission time (TS) and received after their reflection each at a reception time (TE), comprising:
selecting a first pulse repetition rate (PRR₁) from a set (M) of at least two different pulse repetition rates (PRRᵢ) and providing the selected pulse repetition rate (PRR₁) for the emission,
determining an emission time (TS) to which the reception time (TE) of a reflected pulse (E) is temporally closest and a time interval (Δ) therebetween,
and, when the determined time interval (Δ) undershoots a predetermined first threshold (σ₁), selecting a second pulse repetition rate (PRR₂) from the set (M) and providing the second pulse repetition rate (PRR₂) for the emission,
**characterized in that**, if the determined time interval (Δ) exceeds a predetermined second threshold (σ₂) that is larger than the first threshold (σ₁), the next higher or the highest pulse repetition rate (PRRᵢ) from the set (M) is selected as second pulse repetition rate (PRR₂).

5. Method according to claim 4, **characterized in that**, if the emission time (TS) that is determined when the first threshold (σ₁) is undershot lies before said reception time (TE), the next higher or, if none such exists, the lowest pulse repetition rate (PRRᵢ) from the set (M) is selected as second pulse repetition rate (PRR₂),
and, if the emission time (TS) that is determined when the first threshold (σ₁) is undershot lies after said reception time (TE), the next lower or, if none such exists, the highest pulse repetition rate (PRRᵢ) from the set (M) is selected as second pulse repetition rate (PRR₂).

## Revendications

1. Procédé de mesure de l'éloignement de cibles environnantes (U) par la mesure du temps de parcours d'impulsions, notamment d'impulsions laser, s'y réfléchissant, lesquelles sont émises successivement chacune à un instant d'émission (TS) respectif selon une fréquence de répétition des impulsions (PRR) pouvant être prédéterminée et sont réceptionnées chacune à un instant de réception (TE) respectif après leur réflexion, comprenant :
le choix d'une première fréquence de répétition des impulsions (PRRᵢ) parmi une quantité (M) d'au moins deux fréquences de répétition des impulsions (PRRᵢ) différentes et la spécification de la fréquence de répétition des impulsions (PRR₁) choisie pour l'émission,
la détermination d'un instant d'émission (TS), lequel se situe le plus proche dans le temps de l'instant de réception (TE) d'une impulsion réfléchie (E), et d'un intervalle de temps (Δ) entre ceux-ci,
et, lorsque l'intervalle de temps (Δ) déterminé est en-dessous d'une première valeur de seuil (σ₁) fixée, le choix d'une deuxième fréquence de répétition des impulsions (PRR₂) parmi la quantité (M) et la spécification de la deuxième fréquence de répétition des impulsions (PRR₂) pour l'émission,
**caractérisé en ce que** la valeur réciproque de la fréquence de répétition des impulsions (PRR₁) la plus élevée et la valeur réciproque de la fréquence de répétition des impulsions (PRR₂) la plus faible dans la quantité (M) se distinguent l'une de l'autre par au moins le double de la première valeur de seuil (σ₁).

2. Procédé selon la revendication 1, **caractérisé en ce que**, si l'instant d'émission (TS) déterminé lorsque la première valeur de seuil (σ₁) n'est pas atteinte se situe avant ledit instant de réception (TE), la fréquence de répétition des impulsions (PRRᵢ) la plus proche en valeur croissante, ou si une telle fréquence n'existe pas, la fréquence de répétition des impulsions (PRRᵢ) la plus petite dans la quantité (M), est choisie en tant que deuxième fréquence de répétition des impulsions (PRRᵢ),
et, si l'instant d'émission (TS) déterminé lorsque la première valeur de seuil (σ₁) n'est pas atteinte se situe après ledit instant de réception (TE), la fréquence de répétition des impulsions (PRRᵢ) la plus proche en valeur décroissante, ou si une telle fréquence n'existe pas, la fréquence de répétition des impulsions (PRRᵢ) la plus élevée dans la quantité (M), est choisie en tant que deuxième fréquence de répétition des impulsions (PRRᵢ).

3. Procédé selon la revendication 1 ou 2, **caractérisé en ce que**, lorsque l'intervalle de temps (Δ) déterminé dépasse une deuxième valeur de seuil (σ₂) fixée, laquelle est supérieure à la première valeur de seuil (σ₁), la fréquence de répétition des impulsions (PRRᵢ) la plus proche en valeur croissante ou la plus élevée dans la quantité (M) est choisie en tant que deuxième fréquence de répétition des impulsions (PRRᵢ).

4. Procédé de mesure de l'éloignement de cibles environnantes (U) par la mesure du temps de parcours d'impulsions, notamment d'impulsions laser, s'y réfléchissant, lesquelles sont émises successivement chacune à un instant d'émission (TS) respectif selon une fréquence de répétition des impulsions (PRR) pouvant être prédéterminée et sont réceptionnées chacune à un instant de réception (TE) respectif après leur réflexion, comprenant :
le choix d'une première fréquence de répétition des impulsions (PRR₁) parmi une quantité (M) d'au moins deux fréquences de répétition des impulsions (PRRᵢ) différentes et la spécification de la fréquence de répétition des impulsions (PRR₁) choisie pour l'émission,
la détermination d'un instant d'émission (TS), lequel se situe le plus proche dans le temps d'un instant de réception (TE) d'une impulsion réfléchie (E), et d'un intervalle de temps (Δ) entre ceux-ci,
et, lorsque l'intervalle de temps (Δ) déterminé est en-dessous d'une première valeur de seuil (σ₁) fixée, le choix d'une deuxième fréquence de répétition des impulsions (PRR₂) dans la quantité (M) et la spécification de la deuxième fréquence de répétition des impulsions (PRR₂) pour l'émission,
**caractérisé en ce que**, lorsque l'intervalle de temps (Δ) déterminé dépasse une deuxième valeur de seuil (σ₂) fixée, laquelle est supérieure à la première valeur de seuil (σ₁), la fréquence de répétition des impulsions (PRRᵢ) la plus proche en valeur croissante ou la plus élevée dans la quantité (M) est choisie en tant que deuxième fréquence de répétition des impulsions (PRRᵢ).

5. Procédé selon la revendication 4, **caractérisé en ce que**, si l'instant d'émission (TS) déterminé lorsque la première valeur de seuil (σ₁) n'est pas atteinte se situe avant ledit instant de réception (TE), la fréquence de répétition des impulsions (PRRᵢ) la plus proche en valeur croissante, ou si une telle fréquence n'existe pas, la fréquence de répétition des impulsions (PRRᵢ) la plus petite dans la quantité (M), est choisie en tant que deuxième fréquence de répétition des impulsions (PRRᵢ),
et, si l'instant d'émission (TS) déterminé lorsque la première valeur de seuil (σ₁) n'est pas atteinte se situe après ledit instant de réception (TE), la fréquence de répétition des impulsions (PRRᵢ) la plus petite proche en intensité décroissante, ou si une telle fréquence n'existe pas, la fréquence de répétition des impulsions (PRRᵢ) la plus élevée dans la quantité (M), est choisie en tant que deuxième fréquence de répétition des impulsions (PRRᵢ).
